# EUROPÄISCHE PATENTANMELDUNG

(11) **EP 4 297 284 A1**
(43) Veröffentlichungstag der Anmeldung: **27.12.2023**
(21) Anmeldenummer: 23175226.2
(22) Anmeldetag: 25.05.2023
(51) Int. Cl.: H04B 5/00

(54) **VERFAHREN ZUM BETREIBEN EINES HAUSHALTGERÄTES UNTER VERWENDUNG EINES MOBILEN ENDGERÄTES, VERFAHREN ZUM BETREIBEN EINES MOBILEN ENDGERÄTES, HAUSHALTGERÄT UND MOBILES ENDGERÄT**

(30) Priorität: 21.06.2022 DE 102022115351
(71) Anmelder: Miele & Cie. KG, 33332 Gütersloh (DE)
(72) Erfinder: Carsten, Daniel, 33615 Bielefeld (DE)

(57) **Zusammenfassung**

Die Erfindung betrifft ein Verfahren zum Betreiben eines Haushaltgerätes (100) unter Verwendung eines mobilen Endgerätes (120), wobei das Verfahren einen Schritt des Koppelns des Haushaltgerätes (100) mit dem mobilen Endgerät (120) über eine Koppelschnittstelle ansprechend auf ein Endgerätesignal, das ein in einem Nahfeld des Haushaltgerätes (100) erkanntes und an dem Haushaltgerät (100) befestigtes mobiles Endgerät (120) repräsentiert, um eine Nahfeldkommunikation zwischen dem Haushaltgerät (100) und dem mobilen Endgerät (120) zu ermöglichen, und einen Schritt des Bereitstellens mindestens eines Bildsignals zum Anzeigen eines Bildes und/oder mindestens eines Symbols (135) auf einer Gerätebedienfläche (130) des Haushaltgerätes (100) und/oder mindestens eines Anzeigesignals zum Anzeigen eines weiteren Bildes und/oder zum Anzeigen mindestens eines weiteren Symbol (155) auf einer mobilen Bedienfläche (150) des gekoppelten Endgeräts (120) umfasst, wobei die Gerätebedienfläche (130) und die mobile Bedienfläche (150) gemeinsam eine Bedieneinrichtung (125) zum Bedienen des Haushaltgerätes (100) ausformen.

## Beschreibung

Die Erfindung betrifft ein Verfahren zum Betreiben eines Haushaltgerätes unter Verwendung eines mobilen Endgerätes, ein Verfahren zum Betreiben eines mobilen Endgerätes sowie ein Haushaltgerät und ein mobiles Endgerät.

Haushaltgeräte weisen üblicherweise eine Anzeigeeinrichtung auf, um beispielsweise einem Nutzer Informationen über das entsprechende Gerät oder beispielsweise über Geräteprogramme bereitzustellen. Solche Anzeigeeinrichtungen sind dabei unterschiedlich dimensioniert, was beispielsweise mit einer Gerätegröße zusammenhängen kann.

Der hier vorgestellte Ansatz stellt sich die Aufgabe, ein verbessertes Verfahren zum Betreiben eines Haushaltgerätes unter Verwendung eines mobilen Endgerätes, ein verbessertes Verfahren zum Betreiben eines mobilen Endgerätes sowie ein verbessertes Haushaltgerät und ein verbessertes mobiles Endgerät zu schaffen.

Erfindungsgemäß wird diese Aufgabe durch ein Verfahren zum Betreiben eines Haushaltgerätes unter Verwendung eines mobilen Endgerätes, ein Verfahren zum Betreiben eines mobilen Endgerätes unter Verwendung eines Haushaltgerätes sowie ein Haushaltgerät und ein mobiles Endgerät mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen beispielsweise darin, eine Anzeige für ein Haushaltgerät derart anzupassen, dass ein so genanntes User Interface (UI), das bedeutet eine Bedieneinheit, übersichtlicher gestaltet werden kann. Dabei ist es für einen Nutzer nicht notwendig, beispielsweise sein Smartphone oder Tablet in der Hand zu halten. Beispielsweise kann eine Größe einer Anzeigefläche verändert werden oder ein Display des Haushaltgerätes kann mit Hilfe eines mobilen Endgerätes erweitert werden. Vorteilhafterweise kann ein Softwareupdate des Haushaltgerätes verwendet werden, um bereits hergestellten Geräten mit dieser Funktion auszurüsten und somit einen Kundenkomfort steigern zu können. Auch können dadurch Fertigungskosten eingespart werden, die andernfalls bei einem Einbau größerer Anzeigeelemente anfallen würden.

Es wird ein Verfahren zum Betreiben eines Haushaltgerätes unter Verwendung eines mobilen Endgerätes vorgestellt, wobei das Verfahren einen Schritt des Koppelns des Haushaltgerätes mit dem mobilen Endgerät über eine Koppelschnittstelle ansprechend auf ein Endgerätesignal umfasst, das ein in einem Nahfeld des Haushaltgerätes erkanntes und an dem Haushaltgerät befestigtes mobiles Endgerät repräsentiert, um eine Nahfeldkommunikation zwischen dem Haushaltgerät und dem mobilen Endgerät zu ermöglichen. Weiterhin umfasst das Verfahren einen Schritt des Bereitstellens mindestens eines Bildsignals zum Anzeigen eines Bildes mindestens eines Symbols auf einer Gerätebedienfläche des Haushaltgerätes und zusätzlich oder alternativ einen Schritt des Bereitstellens mindestens eines Anzeigesignals zum Anzeigen eines weiteren Bildes und zusätzlich oder alternativ zum Anzeigen mindestens eines weiteren Symbols auf einer mobilen Bedienfläche des gekoppelten Endgeräts, wobei die Gerätebedienfläche und die mobile Bedienfläche gemeinsam eine Bedieneinrichtung zum Bedienen des Haushaltgerätes ausformen.

Das Verfahren kann beispielsweise in dem Haushaltgerät durchgeführt werden, das beispielsweise als ein Küchengerät mit einem Kochfeld und einem Ofen ausgeformt sein kann. Die Bilder und zusätzlich oder alternativ Symbole können beispielsweise jeweils eine Gerätefunktion des Küchengerätes repräsentieren. Dabei kann es sich in Verbindung mit einem Backofen beispielsweise um backofenübliche Symbole handeln. Solche Symbole sind repräsentieren beispielsweise einen Ventilator für Umluft oder Lüftung, Streifen für Ober- und Unterhitze oder beispielsweise eine Flamme für Reinigungsfunktionen, wie beispielsweise Pyrolyse. Das mobile Endgerät kann beispielsweise als ein Tablet oder als ein Smartphone ausgeformt sein. Um das Verfahren durchführen zu können, kann das Endgerät vorteilhafterweise an dem Haushaltgerät befestigt werden. Dies kann vorteilhafterweise unter Verwendung eines Magneten, durch wiederverwendbares Kleben oder beispielsweise durch Einklemmen erfolgen. Vorteilhafterweise kann das Endgerät in dem Nahfeld, das bedeutet in einem direkten Umfeld der Gerätebedienfläche, angebracht werden, sodass es beispielsweise neben, über oder unter der Gerätebedienfläche angeordnet sein kann. Beispielsweise kann ein Abstand zu der Gerätebedienfläche maximal 50cm betragen, vorteilhafterweise kann das Endgerät jedoch möglichst angrenzend an die Gerätebedienfläche befestigt werden, um die Nahfeldkommunikation zwischen den beiden Geräten zu ermöglichen. Die Gerätebedienfläche kann dabei als ein berührungsempfindliches Display ausgeformt sein. Weiterhin kann dadurch erreicht werden, dass eine Intention des Nutzers, das Haushaltgerät zu verwenden, korrekt erkannt wird. Dadurch kann weiterhin ein Sicherheitsaspekt verbessert werden. Die mobile Bedienfläche des mobilen Endgeräts kann vorteilhafterweise ebenfalls als ein berührungsempfindliches Display ausgeformt sein und wie auch die Gerätebedienfläche als Teilfläche der Bedieneinrichtung ausgeformt sein. Dadurch kann vorteilhafterweise erreicht werden, dass einzelne Bilder und zusätzlich oder alternativ Symbole vergrößert dargestellt werden können. Anders ausgedrückt fungiert die mobile Bedienfläche dabei als eine Erweiterung der Gerätebedienfläche.

Gemäß einer Ausführungsform können im Schritt des Bereitstellens das Bildsignal und das Anzeigesignal bereitgestellt werden, sodass auf der Gerätebedienfläche eine Anzeige des Bildes und zusätzlich oder alternativ des mindestens einen Symbols angesteuert werden kann, das sich von dem weiteren Bild und zusätzlich oder alternativ von dem mindestens einen weiteren Symbol auf der mobilen Bedienfläche unterscheiden kann, dessen Anzeige durch das Anzeigesignal angesteuert werden können. Vorteilhafterweise können dadurch die beiden Bedienflächen unabhängig von einander angesteuert werden und somit unterschiedliche Funktionen gleichermaßen durch einen Nutzer ausgewählt werden, da die beiden Bedienflächen gemeinsam beispielsweise als eine Bedieneinrichtung fungieren können.

Im Schritt des Koppelns kann das mobile Endgerät drahtlos und zusätzlich oder alternativ drahtgebunden mit dem Haushaltgerät gekoppelt werden. Insbesondere können im Schritt des Koppelns das Haushaltgerät und das mobile Endgerät drahtlos über eine Bluetooth-Verbindung, eine Infrarot-Verbindung, eine Ultra Wideband (UWB)-Verbindung, eine Nahfeldkommunikation (NFC)-Verbindung und zusätzlich oder alternativ eine WLAN-Verbindung miteinander gekoppelt werden. Durch die Drahtlosverbindung können vorteilhafterweise Kabelmaterialien eingespart werden. Weiterhin kann dadurch ein zum Koppeln erforderliche Mindestabstand flexibel sein, der zum Koppeln beider Geräte vorgegeben sein kann. Wenn jedoch die Geräte drahtgebunden miteinander gekoppelt werden, kann vorteilhafterweise verhindert werden, dass das Haushaltgerät nicht irrtümlich aktiviert wird. Eine zusätzliche Drahtverbindung kann demnach vorteilhafterweise als Sicherungskomponente realisiert werden, wenn das Endgerät in oder an dem Endgerät angebracht wurde.

Ferner kann das Verfahren einen Schritt des Aktivierens eines Endgeräteprogramms des mobilen Endgerätes ansprechend auf das Koppeln umfassen. Das bedeutet, dass vorteilhafterweise nach dem Einsetzen des mobilen Endgerätes eine App zum Bedienen des Haushaltgerätes gestartet werden kann. Vorteilhafterweise kann das Aktivieren des Endgeräteprogramms durch das Anbringen oder Einsetzen ausgelöst werden.

Gemäß einer Ausführungsform kann das Verfahren einen Schritt des Einlesens eines Auswahlsignals über eine Schnittstelle zu der Gerätebedienfläche oder über eine Schnittstelle zu der mobilen Bedienfläche umfassen, wobei das Auswahlsignal eine von einem Nutzer getätigte Auswahl repräsentieren kann. Das bedeutet, dass vorteilhafterweise eine Auswahl des Nutzers in jedem Fall unabhängig davon erkannt werden kann, über welche der Bedienflächen die Auswahl stattgefunden hat.

In einem Schritt des Ansteuerns kann das Haushaltgerät und zusätzlich oder alternativ das mobile Endgerät ansprechend auf das Auswahlsignal angesteuert werden. Vorteilhafterweise kann das Haushaltgerät also gleichermaßen von beiden Geräten aus angesteuert werden, sofern das Endgerät mit dem Haushaltgerät gekoppelt ist.

Ferner wird ein Verfahren zum Betreiben eines mobilen Endgerätes vorgestellt, wobei das Verfahren einen Schritt des Bereitstellens eines Endgerätesignals des mobilen Endgerätes an eine Schnittstelle zu dem Haushaltgerät umfasst, wobei das Endgerätesignal eine Position des mobilen Endgerätes in einem Nahfeld des Haushaltgerätes repräsentiert. Außerdem umfasst das Verfahren einen Schritt des Koppelns des mobilen Endgerätes mit dem Haushaltgerät unter Verwendung des Endgerätesignals und einen Schritt des Einlesens eines Anzeigesignals über die Schnittstelle zu dem Haushaltgerät, um ein Bild und zusätzlich oder alternativ mindestens ein Symbol auf der mobilen Bedienfläche anzuzeigen.

Das Endgerätesignal kann vorteilhafterweise anzeigen, wenn das Endgerät einen zum Koppeln vorgegebenen Mindestabstand aufweist, also nah genug an dem Haushaltgerät angeordnet ist. Das Bild und zusätzlich oder alternativ Symbol kann beispielsweise jeweils eine Gerätefunktion visuell darstellen. Dabei kann es sich in Verbindung mit einem Backofen beispielsweise um backofenübliche Symbole handeln. Solche Symbole sind repräsentieren beispielsweise einen Ventilator für Umluft oder Lüftung, Streifen für Ober- und Unterhitze oder beispielsweise eine Flamme für Reinigungsfunktionen, wie beispielsweise Pyrolyse.

Gemäß einer Ausführungsform kann das Verfahren einen Schritt des Ausgebens eines Auswahlsignals an die Schnittstelle zu dem Haushaltgerät umfassen, wobei das Auswahlsignal eine von einem Nutzer über eine Schnittstelle zu der mobilen Bedienfläche getätigte Auswahl repräsentieren kann. Vorteilhafterweise kann das Auswahlsignal durch einen Nutzer auf dem Endgerät ausgelöst werden, welches schließlich an das Haushaltgerät übertragen werden kann.

Der hier vorgestellte Ansatz schafft ferner eine Steuereinheit, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Steuereinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Steuereinheit bereitgestellt werden kann. Die Steuereinheit kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Des Weiteren wird ein Haushaltgerät vorgestellt, das eine Koppelschnittstelle zum Koppeln des Haushaltgerätes mit einem mobilen Endgerät, eine Bedieneinrichtung mit einer Gerätebedienfläche zum Bedienen des Haushaltgerätes und eine Steuereinheit in einer zuvor genannten Variante aufweist.

Auch wenn der beschriebene Ansatz anhand eines Haushaltgeräts beschrieben wird, kann der hier beschriebene Ansatz entsprechend im Zusammenhang mit einem gewerblichen oder professionellen Gerät, beispielsweise in der Gastronomie, eingesetzt werden. Das Haushaltgerät kann vorteilhafterweise als ein Küchengerät mit einem Kochfeld und einem Backofen ausgeformt sein. Die Steuereinheit kann beispielsweise als ein Steuergerät oder als ein Steuerelement ausgeformt sein.

Gemäß einer Ausführungsform kann die Koppelschnittstelle als ein Anschluss zum Anschließen des mobilen Endgerätes ausgeformt sein. Vorteilhafterweise kann das Endgerät magnetisch mit dem Haushaltgerät verbunden sein oder werden. Die Koppelschnittstelle kann dabei beispielsweise örtlich definiert sein oder alternativ als ein elektrischer Kontakt realisiert sein, mit dem das mobile Endgerät verbunden werden kann.

Weiterhin kann das Haushaltgerät eine Halteeinrichtung zum Halten des mobilen Endgerätes aufweisen, wobei die Halteeinrichtung in einem die Gerätebedienfläche umgebenden Bedienbereich des Haushaltgerätes angeordnet sein kann. Die Halteeinrichtung kann beispielsweise relingartig ausgeformt sein, um das mobile Endgerät an einer Seite stützen zu können.

Es wird ferner ein mobiles Endgerät mit einem Endgeräteprogramm zum Ansteuern eines Haushaltgerätes vorgestellt, wobei das mobile Endgerät eine mobile Bedienfläche zum Anzeigen eines Bildes und zusätzlich oder alternativ mindestens eines Symbols aufweist.

Das mobile Endgerät kann vorteilhafterweise als ein Smartphone oder als ein Tablet ausgeformt sein. Die mobile Bedienfläche kann als ein berührungsempfindliches Display realisiert sein.

Ein Ausführungsbeispiel der Erfindung ist in den Zeichnungen rein schematisch dargestellt und wird nachfolgend näher beschrieben. Es zeigt
- Figur 1: eine schematische Darstellung eines Haushaltgerätes gemäß einem Ausführungsbeispiel;
- Figur 2: ein Ablaufdiagramm eines Ausführungsbeispiels eines Verfahrens zum Betreiben eines Haushaltgerätes unter Verwendung eines mobilen Endgerätes;
- Figur 3: eine schematische Darstellung einer Steuereinheit gemäß einem Ausführungsbeispiel;
- Figur 4: ein Ablaufdiagramm eines Ausführungsbeispiels eines Verfahrens zum Betreiben eines mobilen Endgerätes; und
- Figur 5: eine schematische Darstellung einer Steuereinheit gemäß einem Ausführungsbeispiel.

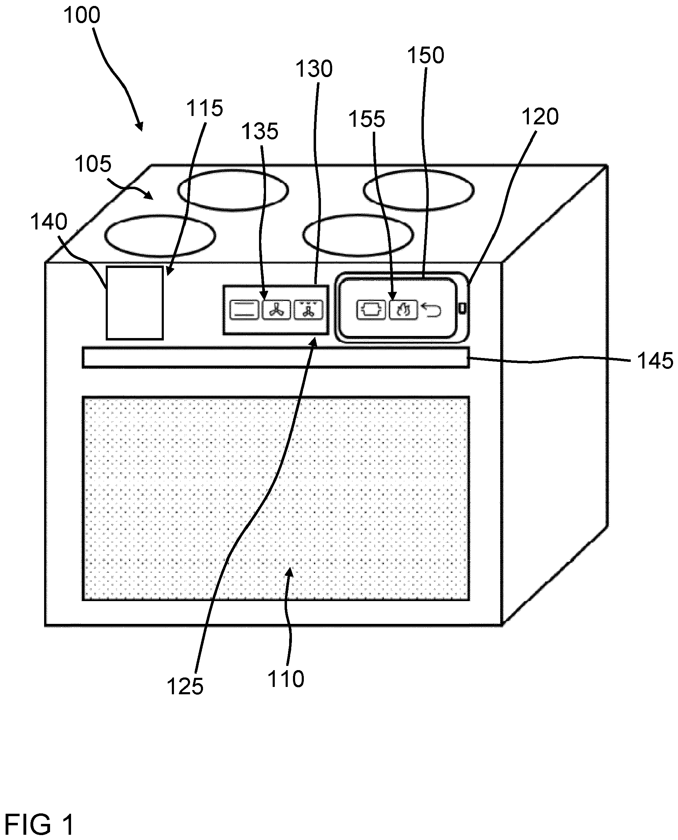

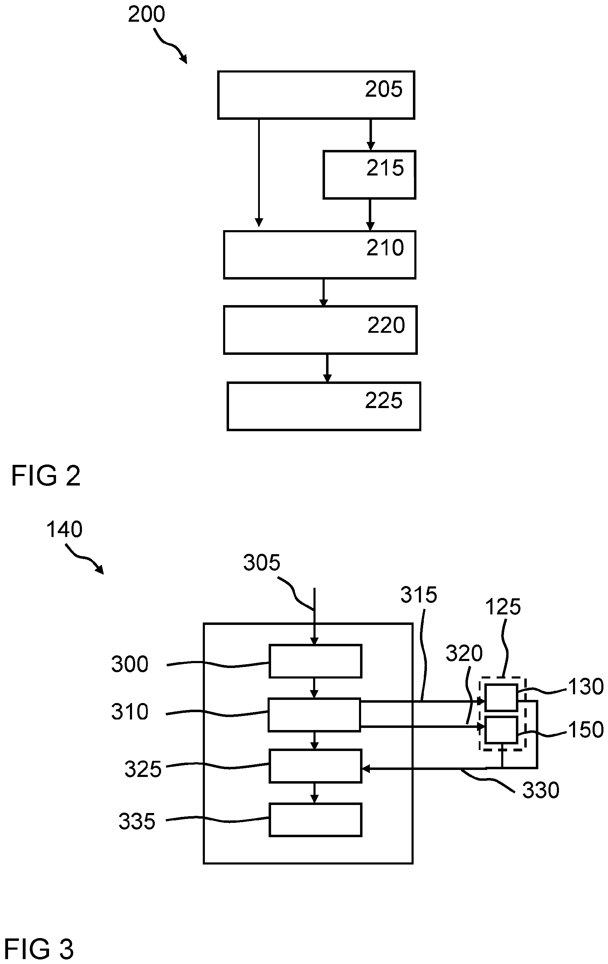

Figur 1 zeigt eine schematische Darstellung eines Haushaltgerätes 100 gemäß einem Ausführungsbeispiel. Das Haushaltgerät 100 ist hierbei als ein Küchengerät realisiert, mit einem Kochfeld 105 auf einer Stirnseite und mit einem Ofen 110, der in einem Korpus des Haushaltgerätes 100 angeordnet ist. Das Haushaltgerät 100 weist dabei eine Koppelschnittstelle 115 auf, die ausgeformt ist, um das Haushaltgerät 100 mit einem mobilen Endgerät 120 zu koppeln. Die Koppelschnittstelle 115 ist beispielsweise als ein Anschluss ausgeformt oder ausformbar, über den das mobile Endgerät 120, wie beispielsweise ein Tablet oder ein Smartphone, mit dem Haushaltgerät 100 koppelbar ist. Gemäß diesem Ausführungsbeispiel ermöglicht die Koppelschnittstelle 115 eine Drahtlosverbindung mit dem mobilen Endgerät 120. Alternativ ist es jedoch denkbar, dass die Koppelschnittstelle 115 als ein drahtgebundener Anschluss ausgeformt ist. Das Haushaltgerät 100 weist weiterhin eine Bedieneinrichtung 125 auf, welche wiederum eine Gerätebedienfläche 130 zum Bedienen des Haushaltgeräts 100 aufweist. Die Gerätebedienfläche 130 ist dabei beispielsweise als ein berührungsempfindliches Display ausgeformt, über das beispielsweise eine Gerätefunktion des Haushaltgeräts 100 von einem Nutzer manuell auswählbar ist. Die Gerätebedienfläche 130 ist beispielsweise ausgeformt, um mindestens ein Bild und/oder Symbol 135 anzuzeigen. Das Haushaltgerät 100 weist ferner eine Steuereinheit 140 auf, die beispielsweise ausgebildet ist, um ein Verfahren zum Betreiben eines Haushaltgerätes 100 unter Verwendung eines mobilen Endgerätes 120 anzusteuern und/oder durchzuführen, wie es beispielsweise in Figur 2 näher beschrieben wird.

Gemäß diesem Ausführungsbeispiel weist das Haushaltgerät 100 eine Halteeinrichtung 145 zum Halten des mobilen Endgerätes 120 auf. Die Halteeinrichtung 145 ist lediglich optional in einem die Gerätebedienfläche 130 umgebenden Bedienbereich des Haushaltgerätes 100 angeordnet. Anders ausgedrückt bedeutet das, dass das mobile Endgerät 120 neben, über oder unter der Gerätebedienfläche 130 anordenbar ist. Die Halteeinrichtung 145 ist dazu gemäß diesem Ausführungsbeispiel reling- oder stangenartig ausgeformt, sodass das mobile Endgerät 120 gestützt wird. Eine Länge der Halteeinrichtung 145 entspricht hierbei optional einer Länge des Backofens 110, beziehungsweise eines Aufnahmeraumes des Backofens 110. Weiterhin ist gemäß diesem Ausführungsbeispiel das mobile Endgerät 120 dargestellt, das ein Endgeräteprogramm zum Ansteuern des Haushaltgerätes 100 aufweist. Weiterhin weist das Endgerät 120 eine mobile Bedienfläche 150, beispielsweise ein berührungsempfindliches Display, zum Anzeigen eines weiteren Bildes und/oder mindestens eines weiteren Symbols 155 auf und erweitert demnach die Gerätebedienfläche 130.

Ein User Interface (UI) an einem Hausgerät ist oft beschränkt auf ein relativ kleines Display und durch vorhandene Bedienelemente. Während der Entwicklung wird daher bisher festgelegt, wie die Bedienelemente final angezeigt und bedient werden. Dazu wird eine Displaygröße festgelegt, die oft mit der Preiskategorie korreliert und ein bis zwei Bedienmöglichkeiten aufweisen, wie beispielsweise ein oder mehrere Drehgeber, kapazitive Bedienfelder und/oder ein Touch-Display. Diese festgelegte Displaygröße entspricht dann dabei einer maximalen Spielwiese für Updates, was die potentiellen Möglichkeiten für ein digitales Systemgeschäft einschränkt.

Eine Erweiterung des UI eines Hausgerätes findet zurzeit mit Hilfe von Apps statt. Durch die Vernetzung des Hausgerätes mit einem mobilen Endgerät 120, wie beispielsweise einem Smartphone oder einem Tablet, können Informationen zwischen den Geräten ausgetauscht werden. Geräteinformationen werden sowohl am Gerät selber, als auch in der App doppelt angezeigt. Die Darstellung in der App ist hingegen dem UI des mobilen Endgerätes 120 angepasst. Dabei hält der Nutzer bisher sein mobiles Endgerät 120 in der Hand und kann dabei entweder direkt vor dem Hausgerät, oder auch weiter weg stehen. Die Kommunikation findet im Allgemeinen über eine Internet, beispielsweise über eine WLAN Verbindung statt. Die Kommunikation zwischen Hausgerät und mobilem Endgerät 120 kann auch über Bluetooth, NFC, Infrarot, oder UWB (Ultra Wideband) stattfinden. Letzteres, die UWB-Technologie, wird aktuell zur Distanz- und Positionsbestimmung zu anderen UWB-Teilnehmern verwendet. Die Positionsbestimmung ist zentimetergenau und bietet auch eine gradgenaue Winkelauflösung. So ist es beispielsweise möglich, sich mit einem Smartphone in der Hand zu einem Hausgerät auszurichten und/oder anzunähern, was beispielsweise durch die UWB-Kommunikation und -Ortung erkannt wird und auf dem Smartphone eine passende App automatisch aufgerufen werden kann. Dies wird aber bislang nur aus der Ferne angewendet.

Vor diesem Hintergrund wird gemäß diesem Ausführungsbeispiel eine Möglichkeit zur Erweiterung des User Interface (UI), das hier als Gerätebedienfläche 130 beschrieben ist, über das mobile Endgerät 120 vorgestellt.

Der hier beschriebene Ansatz weist zwei wesentliche Merkmale auf, aus denen sich wiederum weitere Vorteile ergeben. Demnach werden eine direkte Befestigung des mobilen Endgerätes 120 an dem Haushaltgerät 100 sowie eine Nahfeldkommunikation ermöglicht, die zur Identifikation zwischen Haushaltgerät 100 und mobilem Endgerät 120 sowie zum Datenaustausch führt. Die hier als Halteeinrichtung 145 beschriebene Befestigung ist dabei in direkter Nähe zum Hausgeräte-Display angeordnet, das hier als Gerätebedienfläche 130 beschrieben ist. Dabei ist es beispielsweise entweder seitlich daneben, darüber, oder darunter angeordnet. Es ist alternativ auch eine Anbringung an der Position der Gerätebedienfläche 130 möglich, sodass diese bedeckt und damit als Upgrade vollständig ersetzt wird. Die Befestigung erfolgt dabei beispielsweise magentisch, durch wiederverwendbares Kleben oder durch Einklemmen, ähnlich einem Smartphonehalter aus dem Auto. Beispielsweise erfolgt dabei die Nahfeldkommunikation über Bluetooth, Infrarot, Ultra Wideband (UWB), NFC, oder WLAN. Gemäß diesem Ausführungsbeispiel ist wichtig bei der Art der Kommunikation, dass die Nähe zwischen dem Haushaltgerät 100 und dem mobilen Endgerät 120 beim Anbringen in, oder an der Halteeinrichtung 145 erkannt wird, sodass der Wunsch zur Ul-Erweiterung eindeutig ist. Danach findet der Datenaustausch von Informationen statt.

Das mobile Endgerät 120, vorzugsweise ein Smartphone oder ein Tablet, sind nun als Displayerweiterung für die Gerätebedienfläche 130 ausgeformt. Die Informationen des Haushaltgerätes 100 werden beispielsweise auf beiden Displays 130, 150 aufgeteilt angezeigt, sodass vollständige Rezepte angezeigt werden können, die beispielsweise bei einem Heißgerät in hoher Einbausituation bequem abzulesen sind. Zuvor in der auch als Endgeräteprogramm bezeichneten App aufgerufene Rezepte und Geräteparameter werden beispielsweise bei dem Befestigen des mobilen Endgerätes 120 direkt an das Haushaltgerät 100 übertragen.

Das erweiterte Display, das hier als Bedieneinrichtung 125 beschrieben ist, ist dabei beispielsweise sowohl über die mobile Bedienfläche 150 des mobilen Endgerätes 120 als auch über die Gerätebedienfläche 130 des Haushaltgerätes 100 bedienbar. Beispielsweise ist es auch möglich, dass Drehgeber am Haushaltgerät 100 die Inhalte des mobilen Endgerätes 120 steuern. Die direkte und eindeutige Nahfeldkommunikation lässt dies zu. Durch die Anbringung des mobilen Endgerätes 120 an das Haushaltgerät 100 hat der Nutzer demnach beispielsweise die Hände frei, kann sich dem Kochprozess widmen und kann mit einer Hand die Bedieneinrichtung 125 bedienen. Sollte zusätzlich oder alternativ ein Gestensensor im Haushaltgerät 100 oder im mobilen Endgerät 120 verbaut sein, lässt sich das Haushaltgerät 100 auch berührungslos bedienen.

Dadurch wird dem Nutzer beispielsweise ermöglicht, Rezepte, die er vorher auf dem mobilen Endgerät 120 aufgerufen hat, während des Kochprozesses freihändig abzulesen. Das mobile Endgerät 120 ist am Hausgerät 100 verortet und hat sich mit dem Hausgeräte-Ul 130 zur Bedieneinrichtung 125 erweitert, sodass die Anzeige größer darstellbar ist. Im Rezept angegebene Prozessparameter werden dabei ebenfalls optional mit dem Haushaltgerät 100 ausgetauscht. Dieser Austausch der Informationen findet ganz automatisch statt, wenn das mobile Endgerät 120 am Haushaltgerät 100 befestigt ist. So bietet sich eine komfortable Handhabung an. Wenn das mobile Endgerät 120 wieder entfernt wird, wechselt die Darstellung gemäß diesem Ausführungsbeispiel automatisch in den so genannten Home-Screen oder in eine davor benutzte App zurück.

Durch den hier vorgestellten Ansatz wird zudem das Haushaltgerät 100 beispielsweise als ein Reference-Gerät mit kleinem Display zu einem Prestige-Gerät erweitert, wenn das mobile Endgerät 120 mit optional großem Touch-Display mit dem Haushaltgerät 100 gekoppelt und/oder angebracht wird. Ein Update für ein Prestige-Ul kann so benutzt und dem Kunden zum Kauf angeboten werden.

Gemäß diesem Ausführungsbeispiel wird ferner ermöglicht, bei einem Anbringen oder Vorhalten des mobilen Endgerätes 120 an ein Haushaltgerät 100 mit optionaler Innenraumkamera einen Inhalt oder ein Kamerabild direkt auf dem mobilen Endgerät 120 anzuzeigen. Durch die Nahfeldkommunikation wird der Wunsch, sich den Geräteinhalt anzusehen, durch das Vorhalten direkt erkannt. Auch hier hat man eine komfortablere und einfachere Handhabung. Zudem muss die Tür des Hausgerätes 100, wie beispielsweise ein Kühlschrank oder ein Heißgerät mit intransparenter Tür, nicht geöffnet werden, so dass Energie gespart wird. Die intransparente Tür des Haushaltgerätes 100 ist dabei möglicherweise energie- und kostentechnisch sinnvoller als eine mehrschichtige Glastür.

Figur 2 zeigt ein Ablaufdiagramm eines Ausführungsbeispiels eines Verfahrens 200 zum Betreiben eines Haushaltgerätes unter Verwendung eines mobilen Endgerätes. Das Verfahren 200 wird beispielsweise in einem Haushaltgerät durchgeführt, wie es in Figur 1 beschrieben wurde. Das Verfahren 200 umfasst einen Schritt 205 des Koppelns des Haushaltgerätes mit dem mobilen Endgerät über eine Koppelschnittstelle ansprechend auf ein Endgerätesignal, das ein in einem Nahfeld des Haushaltgerätes erkanntes und an dem Haushaltgerät befestigtes mobiles Endgerät repräsentiert, um eine Nahfeldkommunikation zwischen dem Haushaltgerät und dem mobilen Endgerät zu ermöglichen. Außerdem umfasst das Verfahren 200 einen Schritt 210 des Bereitstellens mindestens eines Bildsignals zum Anzeigen eines Bildes und/oder mindestens eines Symbols auf einer Gerätebedienfläche des Haushaltgerätes. Im Schritt 210 des Bereitstellens wird zusätzlich oder alternativ mindestens ein Anzeigesignal zum Anzeigen eines weiteren Bildes und/oder zum Anzeigen mindestens eines weiteren Symbols auf einer mobilen Bedienfläche des gekoppelten Endgeräts bereitgestellt, wobei die Gerätebedienfläche und die mobile Bedienfläche gemeinsam eine Bedieneinrichtung zum Bedienen des Haushaltgerätes ausformen.

Gemäß diesem Ausführungsbeispiel wird im Schritt 205 des Koppelns das mobile Endgerät drahtlos und/oder drahtgebunden mit dem Haushaltgerät gekoppelt. Insbesondere werden dabei das Haushaltgerät und das mobile Endgerät drahtlos über Bluetooth, Infrarot, Ultra Wideband (UWB), NFC und/oder WLAN miteinander gekoppelt. Im Schritt 210 des Bereitstellens werden lediglich optional sowohl das Bildsignal als auch das Anzeigesignal bereitgestellt, sodass auf der Gerätebedienfläche eine Anzeige des Bildes und/oder des mindestens einen Symbols angesteuert wird, das sich von dem weiteren Bild und/oder von dem mindestens einen weiteren Symbol auf der mobilen Bedienfläche unterscheidet, dessen Anzeige durch das Anzeigesignal angesteuert wird. Das Endgeräteprogramm ist beispielsweise eine App, die auf dem mobilen Endgerät installierbar ist.

Weiterhin optional umfasst das Verfahren 200 einen Schritt 215 des Aktivierens eines Endgeräteprogramms des mobilen Endgerätes ansprechend auf den Schritt 205 des Koppelns, sodass beispielsweise das Endgeräteprogramm automatisiert nach dem Koppeln gestartet wird. In einem Schritt 220 des Einlesens wird weiterhin ein Auswahlsignal über eine Schnittstelle zu der Gerätebedienfläche oder über eine Schnittstelle zu der mobilen Bedienfläche eingelesen, wobei das Auswahlsignal eine von einem Nutzer getätigte Auswahl repräsentiert. Im Anschluss daran wird in einem ebenfalls optionalen Schritt 225 des Ansteuerns das Haushaltgerät und/oder das mobile Endgerät ansprechend auf das Auswahlsignal angesteuert. Das bedeutet, dass das Haushaltgerät ober beide Geräte ansteuerbar ist.

Figur 3 zeigt eine schematische Darstellung einer Steuereinheit 140 gemäß einem Ausführungsbeispiel. Die Steuereinheit 140 entspricht oder ähnelt dabei der in Figur 1 beschriebenen Steuereinheit 140 und ist ausgebildet, um ein Verfahren zum Betreiben eines Haushaltgerätes unter Verwendung eines mobilen Endgerätes anzusteuern und/oder durchzuführen, wie es beispielsweise in Figur 2 beschrieben wurde. Dazu weist die Steuereinheit 140 beispielsweise eine Koppeleinheit 300 zum Koppeln des Haushaltgerätes mit dem mobilen Endgerät über eine Koppelschnittstelle ansprechend auf ein Endgerätesignal 305 auf, das ein in einem Nahfeld des Haushaltgerätes erkanntes und an dem Haushaltgerät befestigtes mobiles Endgerät repräsentiert, um eine Nahfeldkommunikation zwischen dem Haushaltgerät und dem mobilen Endgerät zu ermöglichen. Weiterhin weist die Steuereinheit 140 eine Bereitstelleinheit 310 auf, die ausgebildet ist, um mindestens ein Bildsignal 315 zum Anzeigen eines Bildes und/oder mindestens eines Symbols auf einer Gerätebedienfläche 130 des Haushaltgerätes und/oder um mindestens ein Anzeigesignal 320 zum Anzeigen eines weiteren Bildes und/oder zum Anzeigen mindestens eines weiteren Symbols auf einer mobilen Bedienfläche 150 des gekoppelten Endgeräts, beispielsweise mittels Drahtlosverbindung, bereitzustellen, wobei die Gerätebedienfläche 130 und die mobile Bedienfläche 150 gemeinsam eine Bedieneinrichtung 125 zum Bedienen des Haushaltgerätes ausformen.

Gemäß diesem Ausführungsbeispiel weist die Steuereinheit 140 zusätzlich eine Einleseeinheit 325 auf, die ausgebildet ist, um ein Auswahlsignal 330 über eine Schnittstelle zu der Gerätebedienfläche 130 oder über eine Schnittstelle zu der mobilen Bedienfläche 150 einzulesen. Das Auswahlsignal 330 repräsentiert eine von einem Nutzer getätigte Auswahl. Gemäß diesem Ausführungsbeispiel weist die Steuereinheit 140 weiterhin optional eine Ansteuereinheit 335 zum Ansteuern des Haushaltgeräts und/oder des mobilen Endgeräts ansprechend auf das Auswahlsignal 330 auf.

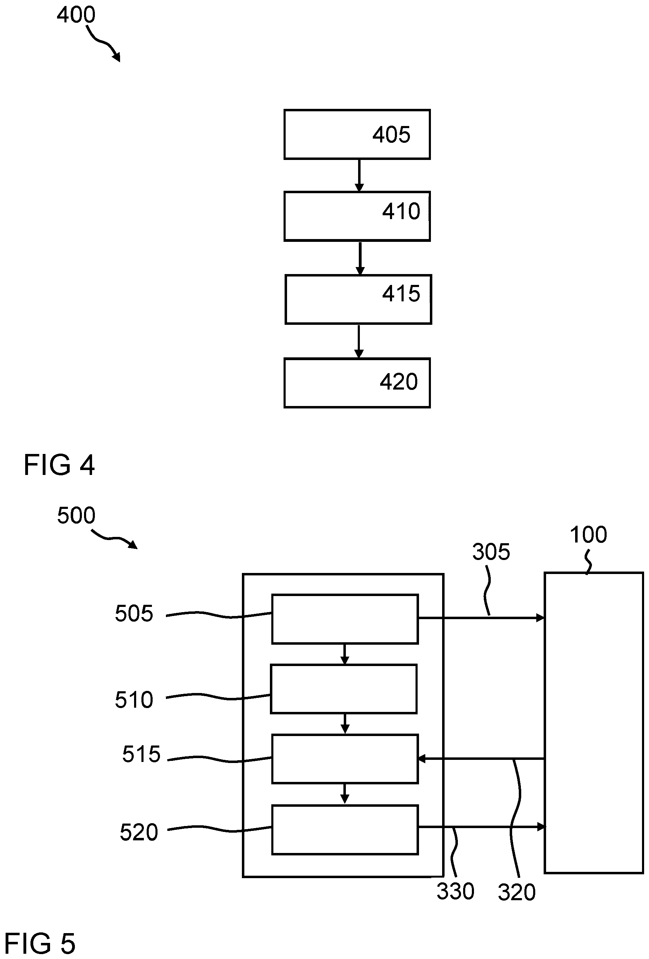

Figur 4 zeigt ein Ablaufdiagramm eines Ausführungsbeispiels eines Verfahrens 400 zum Betreiben eines mobilen Endgerätes. Das Verfahren 400 ist beispielsweise in einem mobilen Endgerät realisierbar, wie es beispielsweise in Figur 1 beschrieben wurde, und umfasst dabei einen Schritt 405 des Bereitstellens, einen Schritt 410 des Koppelns und einen Schritt 415 des Einlesens. Lediglich optional umfasst das Verfahren ferner einen Schritt 420 des Ausgebens.

Im Schritt 405 des Bereitstellens wird dabei ein Endgerätesignal des mobilen Endgerätes an eine Schnittstelle zu dem Haushaltgerät bereitgestellt, wobei das Endgerätesignal eine Position des mobilen Endgerätes in einem Nahfeld des Haushaltgerätes repräsentiert. Im Schritt 410 des Koppelns wird das mobile Endgerät mit dem Haushaltgerät unter Verwendung des Endgerätesignals gekoppelt. Im Schritt 415 des Einlesens wird ein Anzeigesignal über eine Schnittstelle zu einer mobilen Bedienfläche des mobilen Endgerätes eingelesen, um ein Bild und/oder mindestens ein Symbol auf der mobilen Bedienfläche anzuzeigen. Im optionalen Schritt 420 des Ausgebens wird ein Auswahlsignal an die Schnittstelle zu dem Haushaltgerät ausgegeben, wobei das Auswahlsignal eine von einem Nutzer über eine Schnittstelle zu der mobilen Bedienfläche getätigte Auswahl repräsentiert.

Figur 5 zeigt eine schematische Darstellung einer Steuereinheit 500 gemäß einem Ausführungsbeispiel. Die Steuereinheit 500 ist beispielsweise ausgeformt, um ein Verfahren anzusteuern und/oder durchzuführen, wie es in Figur 4 beschrieben wurde, und ist beispielsweise in einem mobilen Endgerät angeordnet, wie es in Figur 1 beschriebene wurde. Die Steuereinheit 500 weist beispielsweise eine Bereitstelleinheit 505 zum Bereitstellen eines Endgerätesignals 305 des mobilen Endgerätes an eine Schnittstelle zu dem Haushaltgerät 100 auf, wobei das Endgerätesignal 305 eine Position des mobilen Endgerätes in einem Nahfeld des Haushaltgerätes 100 repräsentiert. Weiterhin eine Koppeleinheit 510 zum Koppeln des mobilen Endgerätes mit dem Haushaltgerät 100 unter Verwendung des Endgerätesignals 305 und eine Einleseeinheit 515 zum Einlesen eines Anzeigesignals 320 über die Schnittstelle zu dem Haushaltgerät 100, um ein Bild und/oder mindestens ein Symbol auf der mobilen Bedienfläche anzuzeigen. Optional weist die Steuereinheit 500 eine Ausgabeeinheit 520 auf, die ausgebildet ist, um ein Auswahlsignal 330 an die Schnittstelle zu dem Haushaltgerät 100 auszugeben, wobei das Auswahlsignal 330 eine von einem Nutzer über eine Schnittstelle zu der mobilen Bedienfläche getätigte Auswahl repräsentiert.

## Patentansprüche

1. Verfahren (200) zum Betreiben eines Haushaltgerätes (100) unter Verwendung eines mobilen Endgerätes (120), wobei das Verfahren die folgenden Schritte umfasst:
- Koppeln (205) des Haushaltgerätes (100) mit dem mobilen Endgerät (120) über eine Koppelschnittstelle ansprechend auf ein Endgerätesignal (305), das ein in einem Nahfeld des Haushaltgerätes (100) erkanntes und an dem Haushaltgerät (100) befestigtes mobiles Endgerät (120) repräsentiert, um eine Nahfeldkommunikation zwischen dem Haushaltgerät (100) und dem mobilen Endgerät (120) zu ermöglichen; und
- Bereitstellen (210) mindestens eines Bildsignals (315) zum Anzeigen eines Bildes und/oder mindestens eines Symbols (135) auf einer Gerätebedienfläche (130) des Haushaltgerätes (100) und/oder Bereitstellen (210) mindestens eines Anzeigesignals (320) zum Anzeigen eines weiteren Bildes und/oder zum Anzeigen mindestens eines weiteren Symbol (155) auf einer mobilen Bedienfläche (150) des gekoppelten Endgeräts (120), wobei die Gerätebedienfläche (130) und die mobile Bedienfläche (150) gemeinsam eine Bedieneinrichtung (125) zum Bedienen des Haushaltgerätes (100) ausformen.

2. Verfahren (200) gemäß Anspruch 1, wobei im Schritt (210) des Bereitstellens das Bildsignal (315) und das Anzeigesignal (320) bereitgestellt werden, sodass auf der Gerätebedienfläche (130) eine Anzeige des Bildes und/oder des mindestens einen Symbols (135) angesteuert wird, das sich von dem weiteren Bild und/oder von dem mindestens einen weiteren Symbol (155) auf der mobilen Bedienfläche (150) unterscheidet, dessen Anzeige durch das Anzeigesignal (320) angesteuert wird.

3. Verfahren (200) gemäß einem der vorangegangenen Ansprüche, wobei im Schritt (205) des Koppelns das mobile Endgerät (120) drahtlos und/oder drahtgebunden mit dem Haushaltgerät (100) gekoppelt wird, insbesondere wobei im Schritt (210) des Koppelns das Haushaltgerät (100) und das mobile Endgerät (120) drahtlos über eine Bluetooth-Verbindung, eine Infrarot-Verbindung, Ultra Wideband-Verbindung, eine Nahfeldkommunikation -Verbindung und/oder eine WLAN-Verbindung miteinander gekoppelt werden.

4. Verfahren (200) gemäß einem der vorangegangenen Ansprüche, mit einem Schritt (215) des Aktivierens eines Endgeräteprogramms des mobilen Endgerätes (120) ansprechend auf das Koppeln (205).

5. Verfahren (200) gemäß einem der vorangegangenen Ansprüche, mit einem Schritt (220) des Einlesens eines Auswahlsignals (330) über eine Schnittstelle zu der Gerätebedienfläche (130) oder über eine Schnittstelle zu der mobilen Bedienfläche (150), wobei das Auswahlsignal (330) eine von einem Nutzer getätigte Auswahl repräsentiert.

6. Verfahren (200) gemäß Anspruch 5, mit einem Schritt (225) des Ansteuerns des Haushaltgerätes (100) und/oder des mobilen Endgerätes (120) ansprechend auf das Auswahlsignal (330).

7. Verfahren (400) zum Betreiben eines mobilen Endgerätes (120), wobei das Verfahren (400) die folgenden Schritte umfasst:
- Bereitstellen (405) eines Endgerätesignals (305) des mobilen Endgerätes (120) an eine Schnittstelle zu dem Haushaltgerät (100), wobei das Endgerätesignal (305) eine Position des mobilen Endgerätes (120) in einem Nahfeld des Haushaltgerätes (100) repräsentiert;
- Koppeln (410) des mobilen Endgerätes (120) mit dem Haushaltgerät (100) unter Verwendung des Endgerätesignals (305); und
- Einlesen (415) eines Anzeigesignals (320) über die Schnittstelle zu dem Haushaltgerät (100), um ein Bild und/oder mindestens ein Symbol (155) auf der mobilen Bedienfläche (150) anzuzeigen.

8. Verfahren (400) gemäß Anspruch 7, mit einem Schritt (420) des Ausgebens eines Auswahlsignals (330) an die Schnittstelle zu dem Haushaltgerät (100), wobei das Auswahlsignal (330) eine von einem Nutzer über eine Schnittstelle zu der mobilen Bedienfläche (150) getätigte Auswahl repräsentiert.

9. Steuereinheit (140; 500), die ausgebildet ist, um die Schritte (205, 210, 215, 220, 225; 405, 410, 415, 420) eines der Verfahren (200; 400) gemäß einem der Ansprüche 1 bis 6 oder 7 bis 8 in entsprechenden Einheiten (300, 310, 325, 335; 505, 510, 515, 520) auszuführen und/oder anzusteuern.

10. Computer-Programmprodukt mit Programmcode zur Durchführung eines der Verfahren (200; 400) nach einem der Ansprüche 1 bis 6 oder 7 bis 8, wenn das Computer-Programmprodukt auf einer Steuereinheit (140; 500) gemäß Anspruch 9 ausgeführt wird.

11. Haushaltgerät (100), das die folgenden Merkmale aufweist:
- eine Koppelschnittstelle zum Koppeln des Haushaltgerätes (100) mit einem mobilen Endgerät (120);
- eine Bedieneinrichtung (125) mit einer Gerätebedienfläche (130) zum Bedienen des Haushaltgerätes (100); und
- eine Steuereinheit (140) gemäß Anspruch 9.

12. Haushaltgerät (100) gemäß Anspruch 11, wobei die Koppelschnittstelle als ein Anschluss zum Anschließen des mobilen Endgerätes (120) ausgeformt ist.

13. Haushaltgerät (100) gemäß einem der Ansprüche 11 bis 12, mit einer Halteeinrichtung (145) zum Halten des mobilen Endgerätes (120), wobei die Halteeinrichtung (145) in einem die Gerätebedienfläche (130) umgebenden Bedienbereich des Haushaltgerätes (100) angeordnet ist.

14. Mobiles Endgerät (120) mit einem Endgeräteprogramm zum Ansteuern eines Haushaltgerätes (100) gemäß einem der Ansprüche 11 bis 13, wobei das mobile Endgerät (120) eine mobile Bedienfläche (150) zum Anzeigen eines Bildes und/oder mindestens eines Symbols (155) aufweist.
